# EUROPÄISCHE PATENTSCHRIFT

(11) **EP 2 475 475 B1**
(45) Veröffentlichungstag und Bekanntmachung des Hinweises auf die Patenterteilung: **11.12.2013**
(21) Anmeldenummer: 10744511.6
(22) Anmeldetag: 03.08.2010
(51) Int. Cl.: F16B 21/09, B23K 37/04

(54) **VERFAHREN ZUM LOSEN VORFIXIEREN MINDESTENS ZWEIER FEST MITEINANDER ZU VERBINDENDER BAUTEILE**
METHOD FOR LOOSELY PRE-FIXING AT LEAST TWO COMPONENTS TO BE RIGIDLY CONNECTED TO EACH OTHER
PROCÉDÉ DE PRÉFIXATION AMOVIBLE D'AU MOINS DEUX COMPOSANTS À FIXER À DEMEURE

(30) Priorität: 11.09.2009 DE 102009041161; 16.10.2009 DE 102009049602
(43) Veröffentlichungstag der Anmeldung: 18.07.2012
(73) Patentinhaber: Bayerische Motoren Werke Aktiengesellschaft, 80809 München (DE)
(72) Erfinder: van NIEKERK, Johann, 80993 München (DE); WOLF, Sonja, 81675 München (DE); DONHARL, Robert, 84140 Gangkofen (DE); SIGL, Klaus-Peter, 80937 München (DE)
(86) Internationale Anmeldenummer: PCT/EP2010/004746
(87) Internationale Veröffentlichungsnummer: WO 2011/029501

(56) Entgegenhaltungen:
- DE-A1- 3 414 845
- DE-A1-102008 038 747

## Beschreibung

Die vorliegende Erfindung betrifft ein Verfahren zum losen Vorfixieren mindestens zweier fest miteinander zu verbindender Bauteile gemäß dem Oberbegriff des Patentanspruches 1.

Eine Bauteilverbindung, wie sie mit dem Verfahren des Oberbegriffs des Patentanspruches 1 hergestellt werden kann, ist aus der DE 34 14 845 A1 bekannt. Zum relevanten Stand der Technik zählt ferner die ältere, nicht vorveröffentlichte deutsche Patentanmeldung DE 10 2008 038 747 A1.

In der Großserienfertigung von Fahrzeugkarosserien werden eine Vielzahl einzelner Karosserieteile weitgehend vollautomatisiert zusammengebaut. Bei einem Fügevorgang werden zwei oder mehrere Karosserieteile zunächst mittels aufwändiger Spann- und Aufnahmetechnik relativ zueinander positioniert und anschließend miteinander verbunden, z.B. durch Schweißen, Clinchen oder andere Fügeverfahren.

Um eine hohe Maßhaltigkeit der Fahrzeugkarosserie sicherzustellen, kommt es darauf an, dass die zu fügenden Karosserieteile vor dem Verbinden möglichst exakt relativ zueinander positioniert sind. Bei herkömmlichen Fertigungsanlagen wird ein zu fügendes Karosserieteil zunächst mittels mechanischer Spannvorrichtungen exakt in Bezug auf die Anlage bzw. in Bezug auf ein anderes Bauteil positioniert. Anschließend werden die zu fügenden Teile gefügt, z.B. miteinander verschweißt. Dieses Verfahren zur Positionierung von zu fügenden Karosserieteilen kann als "Standard-Verfah-ren" bezeichnet werden, da es sich über viele Jahre bewährt hat. Die Maßhaltigkeit der Fahrzeugkarosserie hängt dabei zum einen davon ab, dass die zu fügenden Karosserieteile möglichst exakt in Bezug auf die "Anlage" positioniert sind und zum anderen, wie exakt die "Anlage" (z.B. Spannvorrichtung) das darauf positionierte zu fügende Karosserieteil in Fügeposition bringt.

Aufgabe der Erfindung ist es, ein Verfahren zum losen Vorfixieren mindestens zweier fest miteinander zu verbindender Bauteile zu schaffen, das einfach durchführbar ist und das mit Blick auf einen anschließenden Fügevorgang in einfacher Weise eine exakte Ausrichtung der lose vorfixierten Bauteile ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Verfahren zum Fixieren, insbesondere zum losen Vorfixieren mindestens zweier fest miteinander zu verbindender Bauteile, insbesondere zweier fest miteinander zu verbindender Karosserieteile einer Fahrzeugkarosserie oder zum Fixieren eines Anbauteils oder eines (Innen-)Ausstattungsteils an einem Karosserieteil. Bei den Bauteilen handelt es sich um ein erstes Bauteil, an dem mindestens ein von dem ersten Bauteil abstehendes erstes Formschlusselement vorgesehen ist und um ein zweites Bauteil, das mindestens ein mit dem ersten Formschlusselement des ersten Bauteils zusammenwirkendes zweites Formschlusselement aufweist.

Durch Aneinandersetzen der beiden Bauteile, derart, dass die Formschlusselemente ineinander greifen und die beiden Bauteile dadurch zumindest in einer Richtung relativ zueinander halten, werden die beiden Bauteile fixiert bzw. lose vorfixiert.

"Vorfixieren" bedeutet in diesem Zusammenhang, dass die Bauteile nicht dauerhaft fest miteinander verbunden sind, sondern problemlos wieder voneinander getrennt werden können. Es kann vorgesehen sein, dass die beiden Bauteile durch die ineinander greifenden Formschlusselemente an den Formschlusselementen in einer, zwei oder mehreren Raumrichtungen fest oder mit einem gewissen Spiel relativ zueinander fixiert sind. Insbesondere kann vorgesehen sein, dass die beiden Bauteile durch die beiden Formschlusselemente in einer Richtung verschieblich relativ zueinander sind und in den übrigen Raumrichtungen fest oder bis auf ein vorgegebenes Spiel nahezu fest miteinander gekoppelt sind.

Ein Grundgedanke der Erfindung ist darin zu sehen, dass das mindestens eine erste Formschlusselement ein sich von dem ersten Bauteil unterscheidendes, separates Teil ist, das bei oder erst nach der Herstellung des ersten Bauteils mit dem ersten Bauteil verbunden wird.

Um das Aneinandersetzen und Ineinandergreifen der Formschlusselemente zu erleichtern und ein verkantungsfreies Bewegen der Formschlusselemente relativ zueinander zu ermöglichen, ist es von Vorteil, wenn das erste Formschlusselement ganz oder teilweise rotationssymmetrisch bezüglich der Oberflächennormalen des ersten Bauteils am Befestigungspunkt des ersten Formschlusselements ist. Grundsätzlich in Betracht kommen beispielsweise kreiszylindrische, kegelstumpfförmige oder keglige Geometrien für das erste Formschlusselement.

Bevorzugt in Frage kommen jedoch erste Formschlusselemente, die ganz oder teilweise die Form einer Kugel oder die ganz oder teilweise eine kugelähnliche Form haben. Kugelähnlich kann z.B. konvex gewölbt bedeuten, vorzugsweise rotationssymmetrisch bzgl. einer Normalenrichtung. Derartige "runde bzw. gewölbte oder konvexe Geometrien" vereinfachen das "Ineinandersetzen" der Formschlusselemente. Ein Verkanten der Formschlusselemente beim Ausrichten der beiden Bauteile relativ zueinander wird durch eine derartige Geometrie weitgehend vermieden.

Nach einer Weiterbildung der Erfindung ist das erste Formschlusselement so gestaltet, dass es sich zumindest in einem Bereich in Richtung des ersten Bauteils hin "verjüngt", wodurch beim Aneinandersetzen der beiden Bauteile ein "Hinterschnitt" erzeugt wird. Dies ist insbesondere bei einem kugelförmigen Formschlusselement, das mit dem ersten Bauteil verbunden ist, der Fall.

Das erste Formschlusselement kann mit dem ersten Bauteil, z.B. verschraubt, vernietet, verklebt oder in anderer Weise damit verbunden werden. In Betracht kommt insbesondere auch eine stoffschlüssige Verbindung des ersten Formschlusselements mit dem ersten Bauteil. Das erste Formschlusselement und das erste Bauteil können jeweils aus Metall bestehen. In diesem Fall kann das erste Formschlusselement einfach auf das erste Bauteil aufgeschweißt werden.

Nach einer Weiterbildung der Erfindung ist das zweite Formschlusselement durch eine in dem zweiten Bauteil vorgesehene Ausnehmung gebildet. Die Ausnehmung kann schlitzartig gestaltet sein. Dementsprechend kann vorgesehen sein, dass das erste Formschlusselement in der lose vorfixierten Position der beiden Bauteile zumindest einen Bereich des zweiten Formschlusselements formschlüssig hintergreift und in einer Längsrichtung des zweiten Formschlusselements bzw. der Ausnehmung relativ dazu verschieblich ist.

Nach einer Weiterbildung der Erfindung ist die das zweite Formschlusselement bildende Ausnehmung so gestaltet, dass sie einen ersten Bereich aufweist, der so dimensioniert ist, dass das erste Formschlusselement hindurchsteckbar ist, und einen sich unmittelbar an den ersten Bereich anschließenden zweiten Bereich, der schmaler ist, so dass das erste Formschlusselement in diesen Bereich einschiebbar ist, senkrecht dazu aber nicht herausziehbar ist.

Im Folgenden wird die Erfindung im Zusammenhang mit der Zeichnung näher erläutert.

Figur 1 zeigt ein erstes Bauteil 1, bei dem es sich um ein Blech handelt, das z.B. aus Stahl oder Aluminium bestehen kann. Auf das erste Bauteil 1 ist eine Kugel 2 aufgeschweißt, die als erstes Formschlusselement fungiert. Die Kugel 2 ist in ihrem unteren Bereich über eine Schweißnaht 3 mit dem ersten Bauteil verbunden.

Die strichpunktiert gezeichnete Symmetrieachse 10 deutet an, dass das erste "Formschlusselement 1" rotationssymmetrisch bzgl. einer Oberflächennormalen des Blechs 1 am "Aufsetzpunkt", d.h. an dem "Punkt" bzw. an der Stelle ist, an dem bzw. an der die Kugel 2 mit dem Blech 1 verbunden ist.

Figur 2 zeigt in Draufsicht eine Bauteilverbindung aus dem in Figur 1 gezeigten ersten Bauteil 1, der darauf aufgeschweißten Kugel 2 und einem zweiten Bauteil 4. Bei dem zweiten Bauteil 4 kann es sich ebenfalls um ein Blech handeln.

In dem zweiten Bauteil 4 ist eine schlüssellochartige Ausnehmung 5 vorgesehen, die einen ersten Bereich 5a und einen zweiten Bereich 5b aufweist, der hier von der Kugel 2, die hier auf das erste Bauteil 1 aufgeschweißt ist, teilweise überdeckt ist.

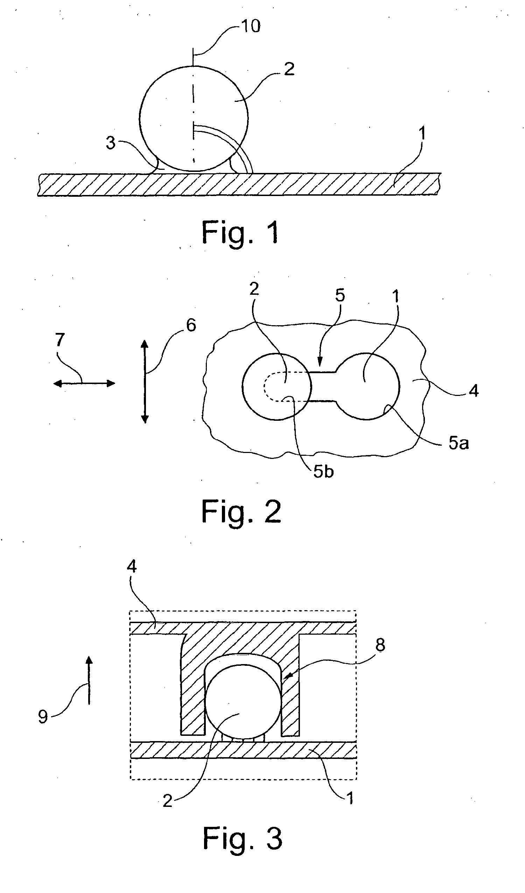

Vor dem Fügen der beiden Bauteile 1, 4 wird die auf das erste Bauteil 1 aufgeschweißte Kugel 2 zunächst durch den ersten Bereich 5a der schlüssellochartigen Ausnehmung 5, die in dem zweiten Bauteil 4 vorgesehen ist, durchgesteckt. Anschließend werden die Bauteile 1, 4 relativ zueinander verschoben, so dass die Kugel 2 in die in Figur 2 gezeigte Position gelangt. In der in Figur 2 gezeigten Position über- bzw. hintergreift die Kugel 2 die schlüssellochartige Ausnehmung 5 in dem Bereich 5b. Dadurch sind die beiden Bauteile 1, 4 sowohl senkrecht zur Zeichenebene als auch in einer Richtung 6 relativ zueinander fixiert.

"Fixiert" bedeutet in diesem Zusammenhang, dass die beiden Bauteile 1, 4 völlig unverschieblich senkrecht zur Zeichenebene und in Richtung des Doppelpfeils 6 oder zumindest, dass sie bis auf ein vorgegebenes Spiel unverschieblich sind, d.h. dass sie "im Wesentlichen" fixiert sind.

In Querrichtung, d.h. in Richtung des Doppelpfeils 7 hingegen können die beiden Bauteile 1, 4 relativ zueinander verschoben werden. Die beiden Bauteile 1, 4 sind durch die "Formschlusselemente" 2, 5 somit lediglich lose vorfixiert.

Bevor die beiden Bauteile 1, 4 dauerhaft fest miteinander verbunden werden, z.B. durch Verschweißen, können sie in Verschieberichtung 7 noch exakt relativ zueinander positioniert werden.

Ein auf das erste Bauteil 1 aufgeschweißtes Formschlusselement, das die Form einer Kugel hat, kann sehr einfach in eine z.B. schlüssellochartig gestaltete Ausnehmung eingeführt werden, ohne darin zu verkanten. Bedingt durch die Kugelform "verjüngt" sich das erste Formschlusselement in Richtung des ersten Bauteils 1 hin (vgl. Figur 1), was nicht nur zur Folge hat, dass die Kugel 2 den Bereich 5b der Ausnehmung 5 (vgl. Figur 2) über- bzw. hintergreift, sondern auch, dass dadurch das Bauteil 1 auch in Richtung des Doppelpfeils 6 in Bezug auf das Bauteil 4 "zentriert" wird.

Figur 3 zeigt ein Ausführungsbeispiel, bei dem das zweite Formschlusselement die Form eines "Topfes" 8 hat, dessen Innendurchmesser im Wesentlichen dem Außendurchmesser der Kugel 2 entspricht und der über die Kugel 2 "gestülpt" ist. Das topfartige Formschlusselement 8 kann kreisförmig gestaltet sein, so dass das zweite Bauteil 4 mit Ausnahme der durch den Pfeil 9 angedeuteten Richtung in allen übrigen Raumrichtungen in Bezug auf das erste Bauteil 1 vorfixiert ist.

Alternativ dazu kann das topfartige zweite Formschlusselement auch länglich bzw. oval gestaltet sein, so dass das zweite Bauteil 4 zusätzlich in einer Richtung senkrecht zur Zeichenebene relativ zu dem ersten Bauteil 1 verschoben werden kann.

Mit der Erfindung lassen sich zwei oder mehrere Bauteile in einfacher Weise relativ zueinander vorfixieren. "Vorfixieren" bedeutet in diesem Zusammenhang, dass die Bauteile lösbar miteinander verbunden sind und in bestimmten Raumrichtungen sogar relativ verschiebbar zueinander verbunden sein können. Eine derartige Vorfixierung vereinfacht das vor einem dauerhaft festen Verbinden der Bauteile erforderliche exakte Ausrichten der Bauteile relativ zueinander erheblich. Der Aufwand für Spannwerkzeuge o.ä. verringert sich drastisch. Bei Bauteilverbünden, die aus drei oder mehr Bauteilen bestehen, kann sogar vorgesehen sein, dass durch Ansetzen des "letzten Bauteils" eines derartigen Bauteilverbunds im Wesentlichen alle Bauteile des Bauteilverbunds exakt oder bereits weitgehend exakt relativ zueinander positioniert sind.

## Patentansprüche

1. Verfahren zum Fixieren, insbesondere zum losen Vorfixieren mindestens zweiter fest miteinander zu verbindender Bauteile (1, 4), insbesondere zweier fest miteinander zu verbindender Karosserieteile einer Fahrzeugkarosserie, mit folgenden Schritten:
- Bereitstellen eines ersten Bauteils (1), an dem mindestens ein von dem ersten Bauteil (1) abstehendes erstes Formschlusselement (2) vorgesehen ist,
- Bereitstellen eines zweiten Bauteils (4), das mindestens ein mit dem ersten Formschlusselement (2) des ersten Bauteils (1) zusammenwirkendes zweites Formschlusselement (5, 8) aufweist,
- Fixieren, insbesondere loses Vorfixieren der beiden Bauteile (1, 4) durch Aneinandersetzen derselben, derart, dass die Formschlusselemente (2, 5, 8) ineinandergreifen und die Bauteile dadurch zumindest in einer Richtung relativ zueinander halten,
**dadurch gekennzeichnet, dass** das mindestens eine erste Formschlusselement (2)
• ein sich von dem ersten Bauteil (1) unterscheidendes, separates Teil ist, und
• bei oder erst nach der Herstellung des ersten Bauteils (1) mit dem ersten Bauteil (1) verbunden wird und zwar stoffschlüssig und
• die Form einer Kugel oder eine kugelähnliche Form aufweist.

2. Verfahren nach Anspruch 1,
**dadurch gekennzeichnet, dass** das erste Formschlusselement (2) ganz oder teilweise rotationssymmetrisch bezüglich der Oberflächennormalen (10) des ersten Bauteils (1) am Befestigungspunkt des ersten Formschlusselements (2) ist.

3. Verfahren nach Anspruch 1 oder 2,
**dadurch gekennzeichnet, dass** sich das erste Formschlusselement (2) zumindest in einem Bereich in Richtung des ersten Bauteils (1) hin verjüngt.

4. Verfahren nach einem der Ansprüche 1 bis 3,
**dadurch gekennzeichnet, dass** das erste Bauteil (1) ein Metallblech ist.

5. Verfahren nach einem der Ansprüche 1 bis 4,
**dadurch gekennzeichnet, dass** erste Formschlusselement (2) ebenfalls aus Metall besteht.

6. Verfahren nach einem der Ansprüche 1 bis 5,
**dadurch gekennzeichnet, dass** das mindestens eine erste Formschlusselement (2) auf das erste Bauteil (1) aufgeschweißt wird.

7. Verfahren nach einem der Ansprüche 1 bis 6,
**dadurch gekennzeichnet, dass** das mindestens eine zweite Formschlusselement (5) durch eine in dem zweiten Bauteil (4) vorgesehene Ausnehmung gebildet ist.

8. Verfahren nach Anspruch 7,
**dadurch gekennzeichnet, dass** die Ausnehmung schlitzartig gestaltet ist, insbesondere in der Form eines Schlüssellochs.

9. Verfahren nach einem der vorangehenden Ansprüche,
**dadurch gekennzeichnet, dass** das erste Formschlusselement (2) in der lose vorfixierten Position der beiden Bauteile (1, 4) zumindest einen Bereich (5b) des zweiten Formschlusselements (5) formschlüssig hintergreift.

10. Verfahren nach einem der vorangehenden Ansprüche,
**dadurch gekennzeichnet, dass** die Ausnehmung (5) einen ersten Bereich (5a) aufweist, der so dimensioniert ist, dass das erste Formschlusselement hindurchsteckbar ist, und einen sich unmittelbar an den ersten Bereich (5a) anschließenden zweiten Bereich (5b) der so dimensioniert ist, dass das erste Formschlusselement (2), wenn es sich in dem zweiten Bereich (5b) befindet, den zweiten Bereich (5b) formschlüssig hintergreift.

11. Verfahren nach einem der Ansprüche 1 bis 10,
**dadurch gekennzeichnet, dass** die lose vorfixierten Bauteile (1, 4) entsprechend einer vorgegebenen Soll-Relativposition exakt relativ zueinander ausgerichtet und anschließend dauerhaft fest miteinander verbunden werden.

## Claims

1. A method of fixing, at least loosely or temporarily, at least two components (1, 4) for firmly joining together, especially two body parts of a vehicle for firmly joining together, in the following steps:
- preparing a first component (1) on which at least one first positively fitting element (2) projecting from the first component (1) is provided,
- preparing a second component (4) comprising at least one second positively fitting element (5, 8) co-operating with the first positively fitting element (2) of the first component (1), and
- fixing, at least loosely fixing, the two components (1,4) by placing them side by side so that the positively fitting elements (2, 5, 8) interlock and hold the components relatively to one another, at least in one direction,
**characterised in that** the at least one first element (2)
• is a separate part differing from the first part (1) and
• is connected via the material to the first component (1), during or after production of the first component(1), and
• is spherical or similarly shaped.

2. A method according to claim 1, **characterised in that**
the first element (2) is partly or completely axially symmetrical relative to the normal (10) to the surface of the first component (1) at the place where the first element (2) is fastened.

3. A method according to claim 1 or claim 2,
**characterised in that** the first element (2) tapers, at least in a region in the direction of the first component (1).

4. A method according to any of claims 1 to 3,
**characterised in that** the first component (1) is a metal sheet.

5. A method according to any of claims 1 to 4,
**characterised in that** the first element (2) likewise is metal.

6. A method according to any of claims 1 to 5, **characterised in that** the at least one first element (2) is welded to the first component (1).

7. A method according to any of claims 1 to 6,
**characterised in that** the at least one second element (5) is a recess formed in the second component (4).

8. A method according to claim 7,
**characterised in that** the recess is a slot, especially in the shape of a keyhole.

9. A method according to any of the previous claims,
**characterised in that** when the two components (1, 4) are loosely and temporarily joined, the first element (2) positively engages at least one region of the second element (5).

10. A method according to any of the preceding claims,
**characterised in that** the recess (5) has a first region (5a) dimensioned so that the first element can be pushed through, and a second region (5b) immediately adjoining the first region (5a) is dimensioned so that the first element (2), when in the second region (5b), positively engages behind the second region (5b).

11. A method according to any of claims 1 to 10,
**characterised in that** the loosely and temporarily fixed components (1, 4) are aligned exactly relatively to one another, corresponding to a set relative position, and are then permanently and firmly joined.

## Revendications

1. Procédé permettant de fixer en particulier de préfixer de façon amovible au moins deux éléments (1, 4) devant être reliés solidairement entre eux, en particulier deux éléments de carrosserie d'un véhicule automobile devant être reliés solidairement entre eux comprenant les étapes consistant à :
- préparer un premier élément (1) sur lequel est prévu au moins un élément de liaison par la forme (2) s'écartant du premier élément (1),
- préparer un second élément (4) qui comporte au moins un second élément de liaison par la forme (5, 8) coopérant avec le premier élément de liaison par la forme (2) du premier élément (1),
- fixer en particulier préfixer de façon amovible les deux éléments (1, 4) en les positionnant l'un contre l'autre de sorte que les éléments de liaison par la forme (2, 5, 8) viennent en prise l'un dans l'autre, et que les éléments soient ainsi maintenus l'un par rapport à l'autre au moins dans une direction,
**caractérisé en ce que**
le premier élément de liaison par la forme (2),
- est une partie séparée distincte du premier élément (1),
- est lié avec le premier élément (1), lors ou directement après sa fabrication et ce par une liaison par la matière, et
- à la forme d'une sphère ou une forme similaire à une sphère.

2. Procédé conforme à la revendication 1,
**caractérisé en ce que**
le premier élément de liaison par la forme (2) est totalement ou partiellement symétrique en rotation par rapport à la normale à la surface (10) du premier élément (1) au niveau du point de fixation de ce premier élément de liaison par la forme (2).

3. Procédé conforme à la revendication 1 ou 2,
**caractérisé en ce que**
le premier élément de liaison par la forme (2) s'amincit au moins dans une zone en direction du premier élément (1).

4. Procédé conforme à l'une des revendications 1 à 3,
**caractérisé en ce que**
le premier élément (1) est une tôle métallique.

5. Procédé conforme à l'une des revendications 1 à 4,
**caractérisé en ce que**
le premier élément de liaison par la forme (2) est également en métal.

6. Procédé conforme à l'une des revendications 1 à 5,
**caractérisé en ce que**
l'élément de liaison par la forme (2) est soudé sur le premier élément (1).

7. Procédé conforme à l'une des revendications 1 à 6,
**caractérisé en ce que**
le second élément de liaison par la forme (5) est formé par un évidement prévu dans le second élément (4).

8. Procédé conforme à la revendication 7,
**caractérisé en ce que**
l'évidement est réalisé en forme de fente, en particulier en forme de trou de serrure.

9. Procédé conforme à l'une des revendications précédentes,
**caractérisé en ce que**
dans la position préfixée de manière amovible des deux éléments (1, 4) le premier élément de liaison par la forme (2) vient en prise par l'arrière par une liaison par la forme au moins dans une zone (5b) du second élément de liaison par la forme (5).

10. Procédé conforme à l'une des revendications précédentes,
**caractérisé en ce que**
l'évidement (5) comporte une première zone (5a) qui est dimensionnée de sorte que le premier élément de liaison par la forme puisse être enfiché dans celle-ci et une seconde zone (5b) se raccordant directement à la première zone (5a) qui est dimensionnée de sorte que lorsqu'il se trouve dans cette seconde zone (5b) le premier élément de liaison par la forme (2) viennent en prise par l'arrière dans la seconde zone (5b) par une liaison par la forme.

11. Procédé conforme à l'une des revendications 1 à 10,
**caractérisé en ce que**
les éléments (1, 4) préfixés de manière amovible sont orientés exactement relativement l'un à l'autre selon une position relative de consigne prédéfinie puis sont reliés entre eux de façon permanente.
